# EUROPÄISCHE PATENTSCHRIFT

(11) **EP 1 616 729 B1**
(45) Veröffentlichungstag und Bekanntmachung des Hinweises auf die Patenterteilung: **13.02.2008**
(21) Anmeldenummer: 05011171.5
(22) Anmeldetag: 24.05.2005
(51) Int. Cl.: B60G 3/20, B60G 7/00, B60G 7/02

(54) **Lagerung für einen Querlenker für Kraftfahrzeuge**
Support for a lateral arm for vehicles
Support pour un bras latéral pour véhicule

(30) Priorität: 16.07.2004 DE 102004034580
(43) Veröffentlichungstag der Anmeldung: 18.01.2006
(73) Patentinhaber: Dr. Ing. h.c. F. Porsche Aktiengesellschaft, 70435 Stuttgart (DE)
(72) Erfinder: Kappich, Joachim, 75378 Bad Liebenzell (DE); Pfingst, Jan, 74372 Sersheim (DE); Gebhardt, Rainer, 71384 Weinstadt (DE)

(56) Entgegenhaltungen:
- DE-A1- 19 610 690
- DE-A1- 19 923 698
- DE-U1- 9 422 146
- US-A- 5 498 018

## Beschreibung

Die Erfindung betrifft einen Querlenker für Kraftfahrzeuge, insbesondere für eine Vorderachse in McPherson - Bauweise nach dem Oberbegriff des Patentanspruches 1.

Eine Lagerung für einen Querlenker ist beispielsweise aus der DE 199 23 698 A1 bekannt geworden. Einem inneren Lager, das den Querlenker mit der Karosserie verbindet, liegt einem Führungsgelenk zur Anbindung eines Rades bzw. Radträgers gegenüber. Zur Abstützung von Längskräften ist am Querlenker ein abgestellter Lenkerabschnitt vorgesehen, der endseits ein Hydrolager zur Abstützung an der Karosserie aufnimmt. Das Hydrolager erlaubt eine hydraulische Dämpfung der Lagerung. Das innere Lager ist als konventionelle Lagerbuchse ausgeführt.

Für McPherson-Achsen ist es aus der US 2,660,449 bekannt, dass ein gelenkig mit einem Querträger verbundener Querlenker über ein Führungslager an einem Radträger angreift. Zwischen dem Führungslager und der Anbindung an den karosserieseitigen Querträger ist ein weiteres Lager vorgesehen, an dem zur Abstützung von Längskräften eine mit der Karosserie verbundene Strebe angreift, die hier als Teil eines Stabilisators ausgeführt ist.

Eine weitere Vorrichtung nach dem Oberbegriff des Anspruchs 1 ist auch aus US-A-5 498 018 bekannt.

Durch Anregungen aus Reifen und Fahrbahn entstehen an gelenkten Vorderachsen so genannte Lenkraddrehschwingungen, d. h. die Anregungen an der Vorderachse werden bis ins Lenkrad übertragen. Es ist Aufgabe der Erfindung, derartige, als störend empfundene Drehschwingungen wirksam zu reduzieren.

Der Erfindung liegt dabei die Erkenntnis zugrunde, dass eine Reduktion von Lenkraddrehschwingungen besonders wirkungsvoll durch eine Bedämpfung von Längsschwingungen an der Vorderachse geschehen kann. Hierfür sind hydraulisch bedämpfte Lager gut geeignet. Dabei stellt sich das Problem, das Dämpfungsvermögen der hydraulisch bedämpften Lager optimal zu nutzen.

Erfindungsgemäß wird daher vorgeschlagen, das innere, karosserieseitige Lager des Querlenkers sehr steif auszuführen, während das zur Abstützung verwendete Lager weich ausgeführt und hydraulisch bedämpft ist. Die hydraulisch Dämpfung ist dabei so eingestellt, dass sie, bezogen auf das innere, karosserieseitige Lager als Schwenkpunkt, in radialer Richtung wirksam ist. Hierdurch wird in vorteilhafter Weise erreicht, dass vor allem Schwenkbewegungen des Querlenkers um das innere Lager bedämpft werden. Andere Kräfte als Längskräfte, die am Querlenker angreifen, können dadurch in geeigneter Weise und ohne Beeinflussung durch die Dämpfung abgestützt werden. Das steif ausgeführte innere Lager trägt dabei maßgeblich zu einer wirksamen Bedämpfung bei, indem es einen Schwenkpunkt bildet, der im wesentlichen keine eigenen (Längs-)Bewegungen ausführt. Auf diese Weise führen Schwenkbewegungen des Querlenkers zu einer maximalen Bewegung am Strebenlager und damit auch am hydraulischen Dämpfer, so dass die unbedämpften Federwege gering sind und somit die hydraulische Dämpfung besonders wirksam ist.

Die erfindungsgemäße Lagerung wird bei einem Querlenker eingesetzt, bei dem das Strebenlager zwischen dem inneren, karosserieseitigen Lager und dem Radführungslager angeordnet ist. In diesem Fall greift am Strebenlager eine Strebe an, die karosserieseitig abgestützt ist.

Vorteilhafte Weiterbildungen sind in den Unteransprüchen beschrieben.

So wird vorgeschlagen, die Steifigkeit des inneren, karosserieseitigen Lagers wenigstens doppelt so hoch wie die Steifigkeit des Strebenlagers in der zu bedämpfenden Richtung zu wählen. Für sportliche Fahrzeuge kann die Steifigkeit des inneren, karosserieseitigen Lagers auch mehr als dreimal so hoch gewählt werden, um einen angemessenen Kompromiss zwischen Radführungseigenschaften und Komfort zu erzielen.

Weiterhin wird vorgeschlagen, das innere Lager als Kugelgelenk auszuführen. Bei dieser Ausführung ist die Dämpfungswirkung des hydraulisch bedämpften Strebenlagers am größten.

Das hydraulisch bedämpfte Strebenlager ist vorzugsweise als Hydrobuchse ausgeführt. Hydrobuchsen weisen eine richtungsabhängige Dämpfung auf und sind daher für den vorliegenden Anwendungsfall besonders geeignet.

Die Strebe ist vorzugsweise karosserieseitig gelenkig abgestützt.

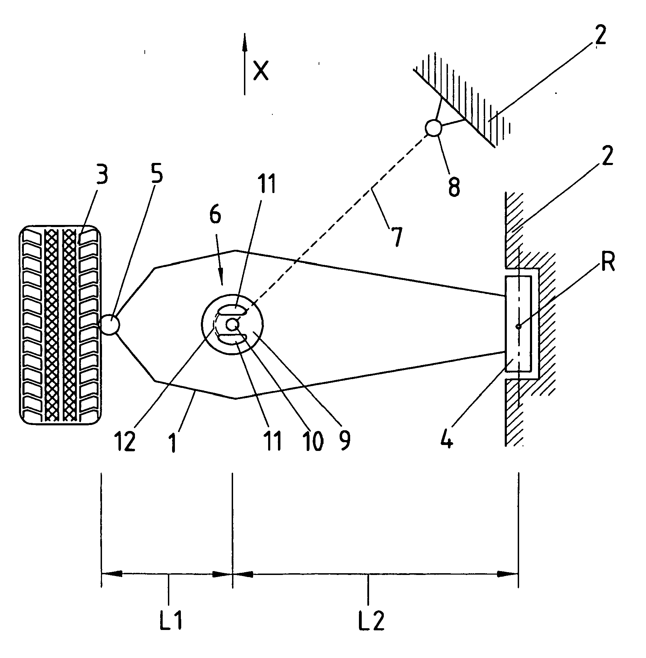

Ein Ausführungsbeispiel der Erfindung ist in der einzigen Figur dargestellt.

Ein Querlenker 1 einer Vorderachse eines nicht dargestellten Kraftfahrzeuges ist zwischen einer Fahrzeugkarosserie 2 und einem Rad 3 angeordnet. Ein inneres, karosserieseitiges Lager 4 zwischen der Karosserie 2 und dem Querlenker 1 ist als Buchsenlager ausgeführt. Ein zwischen dem Rad 3 und dem Querlenker 1 angeordnetes Radführungslager 5 ist als Kugelgelenk ausgeführt. Ein Strebenlager 6 ist im Querlenker 1 vorgesehen und liegt in etwa auf einer Linie zwischen dem Radführungslager 5 und dem inneren Lager 4. Am Strebenlager 6 greift ein Strebe 7 an, die an der Karosserie 2 durch ein weiteres Lager 8 gelenkig angebunden ist.

Das Strebenlager 6 ist als an sich bekannte Hydrobuchse 9 ausgeführt, bei der in einem elastischen Grundmaterial beidseits eines Lagerpunktes 10, an dem die Strebe 7 angreift, zwei gegenüberliegende Kammern 11 vorgesehen sind, die mit einer Hydraulikflüssigkeit gefüllt sind. Die Kammern 11 sind durch eine Verbindungsleitung 12 miteinander verbunden. Die Auslegung der Verbindungsleitung 12 bestimmt maßgeblich die Dämpfungseigenschaften der Hydrobuchse 9. Die Lage der Kammern 11 bestimmt die Richtung der größten Dämpfwirkung der Hydrobuchse 9.

Die Hydrobuchse 9 ist so im Querlenker 1 angeordnet, dass ihre Kammern 11 bezogen auf einen Schwenkpunkt R des Querlenkers 1, der durch das innere Lager 4 gebildet ist, in radialer Richtung neben dem Befestigungspunkt 10 liegen. Im vorliegenden Beispiel ist dies die Fahrzeuglängsrichtung X, da das Strebenlager 6 senkrecht zur Richtung X neben dem inneren Lager 4 angeordnet ist.

Im vorliegenden Beispiel beträgt die Steifigkeit des inneren Lagers 4 in Richtung X das 3,75 fache der Steifigkeit des Strebenlagers 6. Dies bewirkt, dass Verschiebungen in Richtung X, die beispielsweise aus dem Rad 3 in den Querlenker 1 eingeleitet werden, am Lager 4 nur zu einer sehr kleinen Bewegung führen, während am Strebenlager 6 deutlich größere Bewegungen feststellbar sind. Diese größeren Bewegungen sind dort durch Verwendung der Hydrobuchse 9 gut bedämpfbar.

Der Abstand L1 zwischen dem Radführungslager 5 und dem Strebenlager 6 ist so klein gewählt, wie dies der Bauraum zulässt. Auf diese Weise erzeugen Längsbewegungen oder -schwingungen des Rades 3 maximale Bewegungen im Strebenlager 6 und damit in der Hydrobuchse 9, was zu einer Optimierung der Dämpfung beiträgt. Mit L2 ist der Abstand zwischen dem Strebenlager 6 und dem inneren, karosserieseitigen Lager 4 bezeichnet. Der Abstand L2 ist deutlich größer als der Abstand L1.

Da die Strebe 7, über die die Hydrobuchse 9 abgestützt ist, an der Karosserie 2 gelenkig angebunden ist, ist die Hydrobuchse 9 nur radialen Kräften ausgesetzt. Axiale und kardanische Lastfälle werden weitestgehend vermieden, was zu einer Verbesserung der Betriebsfestigkeit der Hydrobuchse 9 beiträgt.

## Patentansprüche

1. Querlenker für Kraftfahrzeuge, insbesondere für eine Vorderachse in McPherson - Bauweise, mit einem inneren, karosserieseitigen Lager (4) zur Verbindung des Querlenkers (1) mit einer Karosserie (2), einem Radführungslager (5) zur Anbindung eines Rades (3) und einem Strebenlager (6), wobei das Strebenlager (6) als hydraulisch bedämpftes Lager (9) ausgeführt ist, **dadurch gekennzeichnet, dass** das innere Lager (4) zumindest in Fahrzeuglängsrichtung (X) sehr steif ausgeführt ist, dass das Strebenlager (6) zwischen dem inneren Lager (4) und dem Radführungslager (5) angeordnet ist und am Strebenlager (6) eine Strebe (7) angreift, die an der Karosserie (2) abgestützt ist, und dass das Strebenlager (6), bezogen auf das innere Lager (4) als Schwenkpunkt (R), in radialer Richtung weich ausgeführt und hydraulisch bedämpft ist.

2. Querlenker nach Anspruch 1, **dadurch gekennzeichnet, dass** die Steifigkeit des inneren Lagers (4) wenigstens doppelt so hoch, vorzugsweise mehr als dreimal so hoch, wie die Steifigkeit des Strebenlagers (6) in der zu bedämpfenden Richtung gewählt ist.

3. Querlenker nach Anspruch 1 oder 2, **dadurch gekennzeichnet, dass** das innere Lager (4) als Kugelgelenk ausgeführt ist.

4. Querlenker nach Anspruch 1, 2 oder 3, **dadurch gekennzeichnet, dass** das Strebenlager (6) als Hydrobuchse (9) ausgeführt ist.

5. Querlenker nach einem der vorstehenden Ansprüche, **dadurch gekennzeichnet, dass** die Strebe (7) an der Karosserie (2) gelenkig abgestützt ist.

## Claims

1. Wishbone for motor vehicles, in particular for a front axle in a McPherson construction, with an inner bearing (4) on the vehicle body for connecting the wishbone (1) to a vehicle body (2), a wheel control bearing (5) for the connection of a wheel (3), and a strut bearing (6), the strut bearing (6) being designed as a hydraulically damped bearing (9), **characterized in that** the inner bearing (4) is of very stiff design at least in the longitudinal direction (X) of the vehicle, **in that** the strut bearing (6) is arranged between the inner bearing (4) and the wheel control bearing (5), and a strut (7) which is supported on the vehicle body (2) acts on the strut bearing (6), and **in that** the strut bearing (6) is of soft design in the radial direction with respect to the inner bearing (4) as the pivot point (R), and is hydraulically damped.

2. Wishbone according to Claim 1, **characterized in that** the stiffness of the inner bearing (4) is selected to be at least twice as high, preferably more than three times as high, as the stiffness of the strut bearing (6) in the direction to be damped.

3. Wishbone according to Claim 1 or 2, **characterized in that** the inner bearing (4) is designed as a ball joint.

4. Wishbone according to Claim 1, 2 or 3, **characterized in that** the strut bearing (6) is designed as a hydraulic bush (9).

5. Wishbone according to one of the preceding claims, **characterized in that** the strut (7) is supported on the vehicle body (2) in an articulated manner.

## Revendications

1. Bras oscillant transversal pour véhicules automobiles, notamment pour un essieu avant de type Macpherson, avec un palier intérieur (4) côté carrosserie pour l'assemblage du bras oscillant transversal (1) à une carrosserie (2), un palier (5) de guidage de roue pour le rattachement d'une roue (3) et un palier (6) de jambe de force, le palier (6) de jambe de force étant réalisé sous forme de palier (9) à amortissement hydraulique, **caractérisé en ce que** le palier intérieur (4) est réalisé très rigide au moins dans la direction longitudinale (X) du véhicule, **en ce que** le palier (6) de jambe de force est disposé entre le palier intérieur (4) et le palier (5) de guidage de roue, et une jambe de force (7) qui est supportée sur la carrosserie (2) est appliquée sur le palier (6) de jambe de force, et **en ce que** le palier (6) de jambe de force est réalisé souple en direction radiale par rapport au palier intérieur (4) en tant que point de pivotement (R) et est amorti hydrauliquement.

2. Bras oscillant transversal selon la revendication 1, **caractérisé en ce que** la rigidité du palier intérieur (4) est choisie égale au moins au double et de préférence au plus du triple de celle du palier (6) de jambe de force dans la direction à amortir.

3. Bras oscillant transversal selon la revendication 1 ou 2, **caractérisé en ce que** le palier intérieur (4) est réalisé sous forme d'articulation sphérique.

4. Bras oscillant transversal selon la revendication 1, 2 ou 3, **caractérisé en ce que** le palier (6) de jambe de force est réalisé sous forme de bague hydraulique (9).

5. Bras oscillant transversal selon l'une des revendications précédentes, **caractérisé en ce que** la jambe de force (7) est supportée de manière articulée sur la carrosserie (2).
